(19) Europäisches Patentamt
European Patent Office
Office européen des brevets

(11) **EP 4 071 481 B1**

(12) **EUROPEAN PATENT SPECIFICATION**

(45) Date of publication and mention
of the grant of the patent:
**11.12.2024 Bulletin 2024/50**

(21) Application number: **20895573.2**

(22) Date of filing: **07.10.2020**

(51) International Patent Classification (IPC):
*G01N 35/00* *(2006.01)*     *G01N 35/10* *(2006.01)*

(52) Cooperative Patent Classification (CPC):
**G01N 35/1016;** G01N 2035/1018

(86) International application number:
**PCT/JP2020/037938**

(87) International publication number:
**WO 2021/111725 (10.06.2021 Gazette 2021/23)**

(54) **AUTOMATIC ANALYSIS DEVICE AND DISPENSING METHOD**

AUTOMATISCHE ANALYSEVORRICHTUNG UND AUSGABEVERFAHREN

DISPOSITIF D'ANALYSE AUTOMATISÉ ET PROCÉDÉ DE DISTRIBUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2019 JP 2019220385**

(43) Date of publication of application:
**12.10.2022 Bulletin 2022/41**

(73) Proprietor: **Hitachi High-Tech Corporation
Minato-ku
Tokyo 105-6409 (JP)**

(72) Inventors:
• **NODA, Kazuhiro
Tokyo 100-8280 (JP)**
• **HAMASAKI, Koshin
Tokyo 105-6409 (JP)**

(74) Representative: **Strehl Schübel-Hopf & Partner
Maximilianstrasse 54
80538 München (DE)**

(56) References cited:
WO-A1-2014/013836     WO-A1-2017/047481
WO-A1-2019/060716     JP-A- 2002 139 506
JP-A- 2010 256 200     US-A- 5 723 795
US-A1- 2018 201 893

## Description

Technical Field

The present disclosure relates to an automatic analysis device and a pipetting method. Here, the term "dispensing" is a synonym of the term "pipetting".

Background Art

An automatic analysis device such as a clinical chemistry analyzer or an immunoassay analyzer includes a pipetting mechanism that aspirates a predetermined amount of a specimen such as a biological sample and a reagent and that discharges the aspirated specimen and reagent into a reaction vessel, and an analysis mechanism that analyzes a reaction liquid of the specimen and the reagent.

The pipetting mechanism includes a probe inserted into a liquid such as the specimen or the reagent, a syringe serving as a pressure source for aspiration and discharge of the liquid, and a flow path connecting the probe and the syringe. The pipetting mechanism pipettes a predetermined amount of liquid by inserting the probe into the liquid in a specimen tube or a reagent bottle, operating the syringe and aspirating the predetermined amount of liquid, moving the probe to the reaction vessel, and discharging the liquid. At the time of pipetting, a disposable tip may be mounted on a tip end of the probe to prevent a component from being carried over to the next inspection.

Depending on an analysis item, a plurality of reagents or both reagents and specimens may be simultaneously held in the probe or the tip (pipetting nozzle) and pipetted into the reaction vessel. Thus, when a plurality of types of liquids are held in the pipetting nozzle at the same time, the plurality of types of liquids are continuously aspirated, and after all the liquids are aspirated, the liquids are pipetted by being discharged into the reaction vessel. By pipetting the plurality of types of liquids at the same time, the amount of used cleaning water, the number of used tips, and the time required for pipetting can be reduced.

At the time of pipetting, an abnormality such as aspiration of bubbles generated by handling the specimen tube and clogging of the flow path caused by a high-viscosity specimen or fibers such as fibrin in the specimen may occur. Therefore, an accuracy of an analysis result can be improved by accurately estimating a pipetting state and detecting the occurrence of the abnormality with high accuracy.

As a method for executing abnormality detection of pipetting, for example, PTL 1 discloses a technique of detecting a pipetting abnormality using an integral value of pressure data in a specific time interval and a difference between an average pressure calculated at the end of discharge and an average pressure calculated at the time of normal discharge as indices for a pressure fluctuation at the time of discharge of a specimen, and comparing the indices with preset thresholds.

PTL 2 discloses a technique of detecting an abnormality at the time of pipetting a predetermined liquid using a ratio between a pressure at the time of pipetting a reference liquid serving as a reference for abnormality detection and a pressure at the time of pipetting the predetermined liquid.

Citation list

Patent Literature

PTL 1: Japanese Patent No. 3633631
PTL 2: JP-H-11-258244

WO 2019/060716 A1 discloses an automatic analysis device with the features in the preamble of present claim 1.

Summary of Invention

Technical Problem

However, as described in PTL 1, when the plurality of types of liquids are simultaneously pipetted, the accuracy of abnormality detection may decrease due to a difference in a pipetted amount or a physical property value of the other liquid aspirated into the nozzle before the liquid to be subjected to pipetting abnormality detection.

Similar to PTL 1, in PTL 2, the accuracy of abnormality detection may decrease due to a difference in the pipetted amount or the physical property value of the reference liquid aspirated into the pipetting nozzle before the predetermined liquid to be subjected to abnormality detection. Since a part is required for holding the reference liquid, it is difficult to reduce the size of the device.

Therefore, the present disclosure provides a technique capable of detecting, when a plurality of types of liquids are simultaneously pipetted, an abnormality at the time of pipetting a liquid to be subjected to abnormality detection with high accuracy regardless of a pipetted amount or a physical property value of the liquid aspirated before the liquid to be subjected to abnormality detection.

Solution to Problem

In order to solve the above problems, an automatic analysis device according to claim 1 and a pipetting method of a fluid using an automatic analysis device according to claim 12 is provided.

More features relevant to the present disclosure are clarified based on descriptions of the present description and accompanying drawings. Aspects of the present disclosure may be achieved and implemented using elements, combinations of various elements, the following detailed description, and accompanying claims.

The descriptions of the present description are merely exemplary, and are not intended to limit the scope of the claims or application in any sense.

Advantageous Effect

According to the automatic analysis device in the present disclosure, an abnormality can be detected with high accuracy at the time of pipetting a liquid to be subjected to abnormality detection.

Problems, configurations, and effects other than those described above will be clarified according to the following descriptions of embodiments.

Brief Description of Drawings

[Fig. 1] Fig. 1 is a schematic configuration diagram showing a pipetting mechanism of an automatic analysis device according to a first embodiment.

[Fig. 2] Fig. 2 is a flowchart illustrating a pipetting method according to the first embodiment.

[Fig. 3] Fig. 3 is a flowchart illustrating a method for determining the presence or absence of an abnormality according to the first embodiment.

[Fig. 4] Fig. 4 is a schematic diagram showing a state of a fluid in a probe and a tip in the pipetting operation of Fig. 2.

[Fig. 5] Fig. 5 is a flowchart showing a method of calculating an aspiration amount of a reagent and air gap in the pipetting operation of Fig. 2.

[Fig. 6] Fig. 6 is a diagram showing a relationship between a determination index and a pipetted amount of a reagent in the first embodiment.

[Fig. 7] Fig. 7 is a schematic configuration diagram showing a pipetting mechanism of an automatic analysis device according to a second embodiment.

[Fig. 8] Fig. 8 is a flowchart illustrating a pipetting method according to the second embodiment.

[Fig. 9] Fig. 9 is a schematic diagram showing a state of the fluid in the probe in the pipetting operation of Fig. 8.

[Fig. 10] Fig. 10 is a flowchart illustrating a method for determining the presence or absence of an abnormality according to a third embodiment not covered by the claimed invention.

[Fig. 11] Fig. 11 is a diagram showing a relationship between a determination index and a pipetted amount of a reagent, and a determination threshold according to the third embodiment.

[Fig. 12] Fig. 12 is a schematic configuration diagram showing a pipetting mechanism of an automatic analysis device according to a fourth embodiment not covered by the claimed invention.

[Fig. 13] Fig. 13 is a flowchart illustrating a method for determining the presence or absence of an abnormality according to the fourth embodiment.

[Fig. 14] Fig. 14 is a diagram showing a relationship between a determination index and a viscosity of a reagent, and a determination threshold according to the fourth embodiment.

Description of Embodiments

[First Embodiment]

<Configuration of Pipetting Mechanism of Automatic Analysis Device>

In a pipetting mechanism of an automatic analysis device according to a first embodiment, a tip is detachably attached to a tip end of a probe. The pipetting mechanism according to the present embodiment detects aspiration of bubbles (hereinafter referred to as "bubble aspiration") or clogging when a reagent and a specimen are sequentially aspirated into a tip and simultaneously pipetted into a reaction vessel and when the specimen is aspirated in a state in which the reagent is aspirated and held in the tip in advance in this manner.

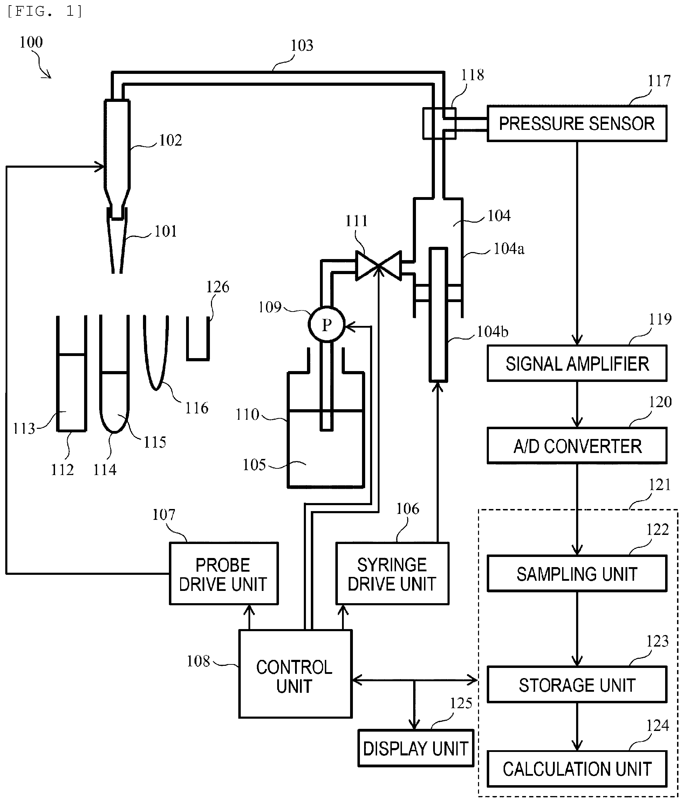

Fig. 1 is a schematic configuration diagram showing a pipetting mechanism 100 of the automatic analysis device according to the first embodiment. As shown in Fig. 1, the pipetting mechanism 100 includes a tip 101, a probe 102, a flow path 103, a syringe 104, a syringe drive unit 106, a probe drive unit 107, a control unit 108, a water supply pump 109, a water supply tank 110 that stores cleaning water 105, a solenoid valve 111, a reagent bottle 112 that stores a reagent 113 (first liquid) depending on an analysis item, a specimen tube 114 that stores a specimen 115 (second liquid), a reaction vessel 116, a pressure sensor 117, a branch block 118, a signal amplifier 119, an A/D converter 120, a determination unit 121, a display unit 125, and a tip disposal unit 126.

The tip 101 (pipetting nozzle) can be attached to and detached from a tip end of the probe 102. The probe drive unit 107 such as a motor or an actuator (not shown) is connected to the probe 102, whereby the probe 102 can be moved in horizontal and vertical directions and moved to a predetermined position. The tip 101 is held in, for example, a tip rack (not shown), and the probe drive unit 107 moves the probe 102 above the tip rack and lowers the probe 102, whereby the tip 101 can be mounted on the probe 102. The tip 101 may be attached to the probe 102 in a tip buffer that temporarily holds the tip 101.

The probe 102 is connected to the syringe 104 via the flow path 103, and the inside thereof is filled with the cleaning water 105. The syringe 104 includes a cylinder 104a and a plunger 104b, and the plunger 104b is connected to the syringe drive unit 106. The syringe drive unit 106 drives the plunger 104b with respect to the cylinder 104a in an upper-lower direction, whereby the tip 101 connected to the probe 102 aspirates and discharges a fluid (liquid and gas).

The syringe 104 includes a flow path communicating with the water supply tank 110, and the flow path is provided with the solenoid valve 111 and the water supply pump 109. The cleaning water 105 is stored in the water supply tank 110, and the inside of the probe 102 can be cleaned by discharging the cleaning water 105 from the probe 102 by driving the water supply pump 109. The probe 102 is cleaned, for example, before pipetting the reagent 113 and the specimen 115.

Although not shown, the automatic analysis device includes a reagent storage that holds the reagent bottle 112, a specimen tube rack that holds the specimen tube 114, and a reaction disk that holds the reaction vessel 116. Holding devices of the reagent bottle 112, the specimen tube 114, and the reaction vessel 116 are not limited to the above. The reagent 113 and the specimen 115 that are aspirated into the tip 101 are pipetted into the reaction vessel 116.

The tip 101, in which the reagent 113 and the specimen 115 have been pipetted into the reaction vessel 116, is discarded in the tip disposal unit 126.

The control unit 108 controls operations of the syringe drive unit 106, the probe drive unit 107, the water supply pump 109, and the solenoid valve 111. The control unit 108 may control not only the operation of each component of the pipetting mechanism 100 but also the operation of the entire automatic analysis device.

The pressure sensor 117 is connected to the branch block 118 provided in the middle of the flow path 103, and measures a pressure in the flow path 103. The pressure sensor 117 outputs a pressure detection signal to the signal amplifier 119. A position of the pressure sensor 117 may be on a syringe 104 side as shown in Fig. 1. However, by connecting the pressure sensor 117 to a position as close as possible to the probe 102, a pressure fluctuation of an open portion of the tip 101 can be measured with high sensitivity.

The signal amplifier 119 amplifies a detection signal of the pressure sensor 117 and outputs the amplified signal to the A/D converter 120. The A/D converter 120 converts the amplified signal into a digital signal and outputs the digital signal to the determination unit 121 as a pressure value.

The determination unit 121 is a circuit that determines the presence or absence of an abnormality during a pipetting operation of the pipetting mechanism 100. The determination unit 121 includes a sampling unit 122 that receives an input of the pressure value from the A/D converter 120, a storage unit 123 that stores data such as the pressure value input to the sampling unit 122, and a calculation unit 124 that executes processing on the data stored in the storage unit 123.

The determination unit 121 can communicate with the control unit 108, and transmits the content of the operation to the control unit 108 when it is determined based on a result of data processing in the calculation unit 124 that a stop operation of the operation is necessary.

The determination unit 121 may be implemented as hardware in the automatic analysis device as a dedicated circuit board, or a processor may function as the determination unit 121 by reading and executing a program recorded in the storage unit 123. Further, the processor in a server communicably connected to the automatic analysis device in a wireless or wired manner may read and execute the program and function as the determination unit 121.

The display unit 125 is connected to the control unit 108 and the determination unit 121, and displays the result of the data processing in the determination unit 121, information related to the result, and the like.

<Pipetting Method>

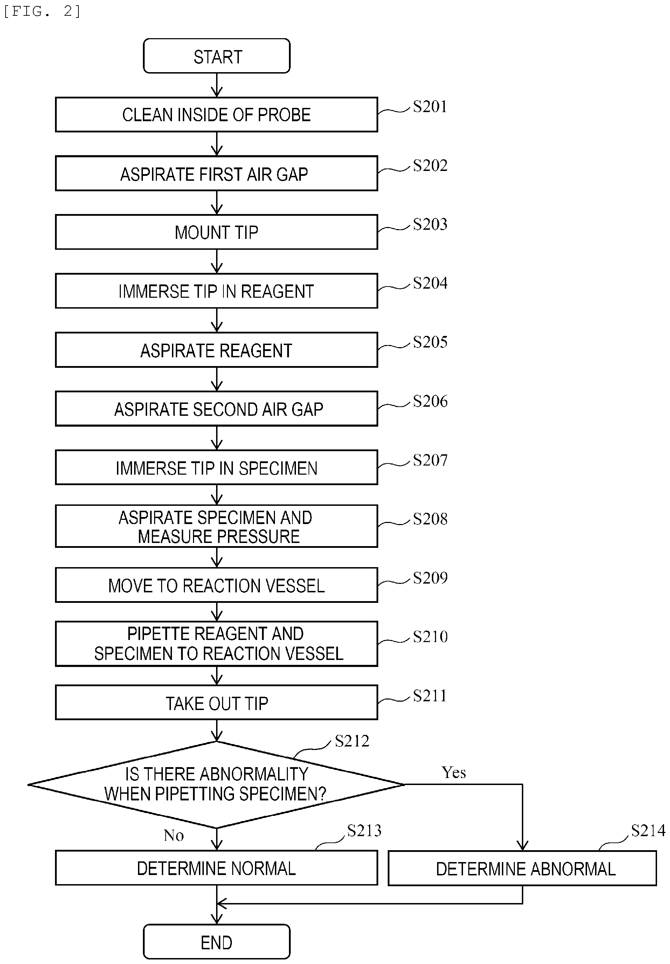

Fig. 2 is a flowchart illustrating a pipetting method according to the first embodiment. The pipetting method according to the present embodiment is actually executed by the control unit 108 shown in Fig. 1 controlling the operation of each component (the syringe drive unit 106, the probe drive unit 107, the water supply pump 109, the solenoid valve 111, and the like) of the pipetting mechanism 100. In the following, each component of the pipetting mechanism 100 may be described as a subject of the operation.

In step S201, the control unit 108 opens the solenoid valve 111, drives the water supply pump 109, and discharges the cleaning water 105 in the water supply tank 110 from the probe 102. Accordingly, the inside of the probe 102 is cleaned.

In step S202, the syringe drive unit 106 drives the syringe 104 to aspirate a first air gap into the probe 102. This is to prevent the cleaning water 105 filling the inside of the probe 102 from being mixed with the reagent 113 to be aspirated in the next step.

In step S203, the probe drive unit 107 mounts the tip 101 on the tip end of the probe 102 by moving the probe 102 above the tip rack or the tip buffer and then lowering the probe 102.

In step S204, the probe drive unit 107 moves the probe 102 above the reagent bottle 112 and lowers the probe 102 until the tip end of the tip 101 is immersed in the reagent 113.

In step S205, the syringe drive unit 106 drives the syringe 104 to aspirate the reagent 113 into the tip 101.

In step S206, the probe drive unit 107 raises the probe 102 until the tip end of the tip 101 comes out from the reagent 113. After that, the syringe drive unit 106 drives the syringe 104 to aspirate a second air gap into the tip 101. This is to prevent the reagent 113 aspirated into the tip 101 from being mixed with the liquid aspirated in the next step.

In the present embodiment, only one type of reagent 113 is aspirated. Alternatively, a plurality of reagents may be pipetted depending on the analysis item.

When the plurality of reagents are pipetted, steps S204-S206 are repeated as many times as necessary, and all the reagents to be pipetted and the second air gap separating the reagents are aspirated into the tip 101.

In step S207, the probe drive unit 107 moves the probe 102 above the specimen tube 114, and lowers the probe 102 until the tip end of the tip 101 is immersed in the specimen 115.

In step S208, the syringe drive unit 106 drives the syringe 104 to aspirate the specimen 115 into the tip 101. Here, the sampling unit 122 of the determination unit 121 receives an input of a pressure value during an aspiration operation of the specimen 115, and stores, in the storage unit 123, the pressure value during the aspiration operation of the specimen 115 as time-series data (hereinafter, may be referred to as a "pressure history").

In step S209, the probe drive unit 107 raises the probe 102 until the tip end of the tip 101 comes out from the specimen 115, and moves the probe 102 such that the tip end of the tip 101 is located inside the reaction vessel 116.

In step S210, the syringe drive unit 106 drives the syringe 104 to discharge the reagent 113 and the specimen 115 that are held in the tip 101 into the reaction vessel 116. At this time, when the plurality of reagents are aspirated, all the reagents aspirated into the tip 101 are simultaneously discharged into the reaction vessel 116.

In step S211, the probe drive unit 107 moves the probe 102 to the tip disposal unit 126, and removes the tip 101 from the probe 102 by discarding the tip 101 in the tip disposal unit 126.

In step S212, the calculation unit 124 of the determination unit 121 determines whether there is an abnormality such as clogging, bubble aspiration, or the like at the time of aspiration of the specimen 115 based on the pressure history at the time of specimen aspiration stored in the storage unit 123 (detects an abnormality). The pressure history when the abnormality such as bubble aspiration or clogging occurs at the time of aspiration of the specimen 115 is different from the pressure history when normal pipetting is performed. Therefore, the presence or absence of the abnormality can be determined by referring to the pressure history. A method for determining the presence or absence of an abnormality using the pressure history will be described later.

In step 212, the determination unit 121 transmits a determination result of the presence or absence of the abnormality to the display unit 125 and the control unit 108. The display unit 125 displays the determination result.

If it is determined in step S212 that there is no abnormality (No), the process proceeds to step S213. In step S213, the control unit 108 determines that the pipetting is terminated normally based on the determination result received from the determination unit 121, and terminates the pipetting operation. The control unit 108 may repeat steps S201 to S213 depending on the analysis item.

If it is determined in step S212 that there is an abnormality (Yes), the process proceeds to step S214. In step S214, the control unit 108 determines that there is an abnormality at the time of aspiration of the specimen 115 based on the determination result received from the determination unit 121. At this time, an alert is displayed on the display unit 125, and the relevant pipetting operation of the specimen 115 is terminated. The specimen 115 is returned to a user. In this way, by stopping the pipetting of the specimen 115 having an abnormality, the consumption of the reagent used for the subsequent analysis can be reduced.

The order of steps S212 to S214 and steps S209 to S211 may be changed. In this case, step S212 is performed after step S208. When it is determined in step S212 that there is an abnormality and the process proceeds to step S214, the control unit 108 terminates the pipetting operation without shifting to step S209. Accordingly, since it is not necessary to discharge the abnormal specimen 115 having the abnormality into the reaction vessel 116, the time and effort for consuming or cleaning the reaction vessel 116 can be reduced.

<Method for Determining Presence or Absence of Abnormality>

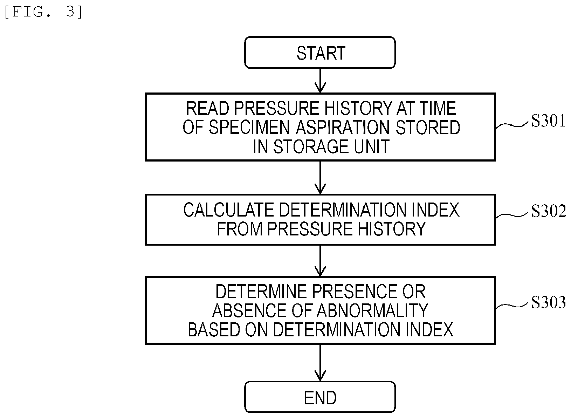

Fig. 3 is a flowchart illustrating a method for determining the presence or absence of an abnormality by the determination unit 121 in step S212 in Fig. 2.

In step S301, the calculation unit 124 reads the pressure history at the time of aspiration of the specimen stored in the storage unit 123. In the present description, the "pressure history at the time of aspiration of the specimen" refers to a pressure value in a predetermined time range including the operation time (aspiration operation time) of the syringe 104 when the specimen 115 is aspirated in step S208.

In step S302, the calculation unit 124 calculates a determination index used for determining the presence or absence of an abnormality based on the pressure history at the time of specimen aspiration. Examples of the "determination index" include an average value of the pressure values during the aspiration operation of the specimen 115, an average value of the pressure values before or after the aspiration operation of the specimen 115, a maximum value or a minimum value of the pressure values, a pressure pulsation cycle or an amplitude of the pressure history, and a statistical distance such as a Euclidean distance between a preset reference pressure history and the pressure history acquired in step S302. The "reference pressure history" is set based on, for example, a number of pressure values acquired in the past, and may be a pressure value when it is determined that the specimen is normally aspirated, or may be a pressure value when it is determined that there is an abnormality at the time of aspiration of the specimen. The degree of similarity or dissimilarity between the reference pressure history and the pressure history may be used as the determination index. A plurality of indexes described above may be combined and used as the determination index.

In the present embodiment, a difference between the average value of the pressure values during the aspiration operation of the specimen 115 and the average value of the pressure values before the aspiration operation is calculated as the determination index, and the difference is used to determine whether the pipetting is normal or bubble aspiration. As a cause of the bubble aspiration, erroneous detection of a liquid surface due to air bubbles unintentionally generated by handling of the specimen tube 114, or the like is considered. The bubbles are generated when the blood specimen 115 is shaken while being transported.

In step S303, the calculation unit 124 determines the presence or absence of an abnormality at the time of aspiration of the specimen 115 based on the determination index. Examples of the method for determining the presence or absence of an abnormality include a method of comparing the determination index with a preset determination threshold, and a method of determining an abnormality when a combination of a plurality of determination indexes satisfies a certain condition. In the present embodiment, an algorithm of comparing a constant determination threshold with the determination index and determining the presence or absence of an abnormality is used. The determination threshold used for determining the presence or absence of an abnormality is stored in advance in the storage unit 123.

In order to detect an abnormality at the time of aspiration of the specimen 115 with high accuracy, as a result of intensive studies, the present inventors have found that it is effective to reduce the influence of the pipetted amount (volume) of the reagent 113 (first liquid) aspirated before the aspiration of the specimen 115 (second liquid) on the pressure history described above.

The pipetted amount of reagent 113 depends on the analysis item. As an example of a physical formula expressing a pressure loss due to the friction of the flow in a pipe, the following Hagen-Poiseuille equation (1) can be mentioned.

$$P_{loss} = 128\mu LQ/(\pi d^4) \ \cdots \ (1)$$

Here, $P_{loss}$ represents the pressure loss, $\mu$ represents a fluid viscosity, L represents a length in which the fluid occupies the pipe, $\pi$ represents a circumferential ratio, d represents a pipe diameter, and Q represents a flow rate in the pipe.

When there are a plurality of types of fluids in the pipe, the pressure loss $P_{loss}$ is calculated for each fluid component. When the pipetted amounts of the reagents 113 are different, the length L in which the fluid occupies the pipe of the tip 101 or the probe 102 changes. Accordingly, the pressure loss $P_{loss}$ changes, which in-

fluences the pressure history used for determining the presence or absence of an abnormality. The pressure history is also influenced by a difference in fluid arrangement in the pipe caused by a difference in a pipetted amount of the reagent 113 because a pressure wave is reflected by a boundary of the fluid component in the pipe. Therefore, by reducing the influence of the pipetted amount of the reagent 113 on the pressure history, an abnormality can be detected with high accuracy. Therefore, the pipetting operation for reducing the influence of the difference in the pipetted amount of the reagent 113 on the pressure history will be described below.

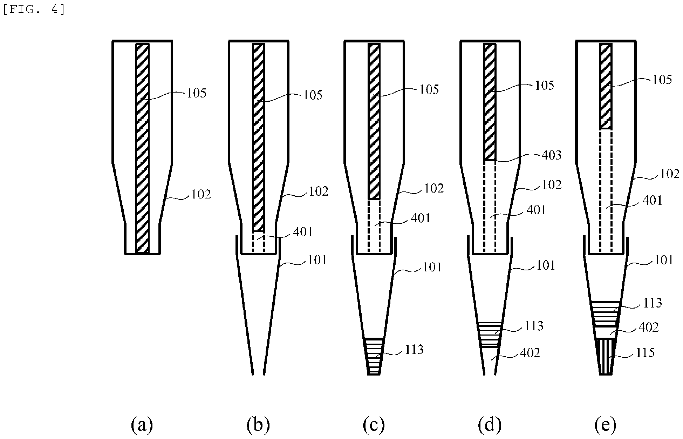

Fig. 4 is a schematic diagram showing a state of a fluid in the probe 102 and the tip 101 in the pipetting operation in Fig. 2. (a) of Fig. 4 shows a state immediately after the inside of the probe 102 is cleaned with the cleaning water 105 in step S201. As shown in (a) of Fig. 4, the inside of the probe 102 is filled with the cleaning water 105.

(b) of Fig. 4 shows a state after aspirating a first air gap 401 in step S202 and mounting the tip 101 in step S203.

(c) of Fig. 4 shows a state after aspirating the reagent 113 in step S205. The reagent 113 is located at the tip end of tip 101.

(d) of Fig. 4 shows a state in which a second air gap 402 is aspirated in step S206. That is, a state before aspirating the specimen 115 is shown. The second air gap 402 is located at the tip end of the tip 101, and the reagent 113 is located above the second air gap 402. (d) of Fig. 4 shows a state in which only one type of reagent 113 and the specimen 115 are aspirated. When the plurality of reagents are pipetted, the reagents 113 and the second air gap 402 are alternately arranged by the number of aspirated reagents.

(e) of Fig. 4 shows a state in which the specimen 115 is aspirated in step S208. The specimen 115 is located at the tip end of the tip 101, the second air gap 402 is located above the specimen 115, and the reagent 113 is located on the second air gap 402.

As described above, the presence or absence of an abnormality is determined using the pressure history at the time of aspiration of the specimen 115. In the state ((d) of Fig. 4) before aspirating the specimen 115, a position of a boundary 403 between the cleaning water 105 and the first air gap 401 varies depending on the pipetted amount (volume) of the reagent 113. By fixing the position of the boundary 403, the influence of the pipetted amount of the reagent 113 on the pressure history at the time of aspiration of the specimen 115 can be reduced.

The position of the boundary 403 between the cleaning water 105 and the first air gap 401 varies depending on a sum (total volume of the fluids) of an amount of the first air gap 401 aspirated in step S202, an amount of the reagent 113 aspirated in step S205, and an amount of the second air gap 402 aspirated in step S206. Therefore, the position of the boundary 403 can be fixed by controlling an operation of the syringe 104 to set the total volume of the fluids aspirated before the aspiration of the specimen 115 to be constant. The fact that the position of the boundary 403 is "fixed" does not necessarily mean that the boundary 403 is located at exactly the same position in the pipetting operation of all analyses. Depending on the used device, probe, and tip, the total volume may vary by, for example, 110 µL. Even if the total volume of the fluids is constant, it is needless to say that the position of the boundary 403 between the cleaning water 105 and the first air gap 401 changes according to an inner diameter of the probe or the tip.

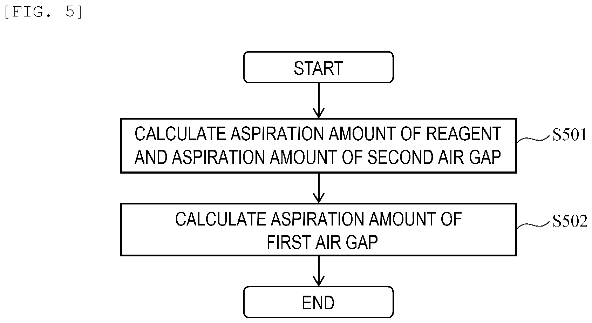

Fig. 5 is a flowchart showing a method for calculating aspiration amounts of the reagent 113, the first air gap 401, and the second air gap 402 in the pipetting operation in Fig. 2. This method is executed by the control unit 108, for example, before the pipetting operation shown in Fig. 2 is started, and the aspiration operation of the reagent or the air gap is performed based on the calculated aspiration amounts. Before executing this method, the total volume of the reagent 113, the first air gap 401, and the second air gap 402 is stored in advance in a storage unit of the control unit 108. The total volume of these fluids can be the same regardless of the analysis item.

In step S501, the control unit 108 calculates the amount of the reagent 113 aspirated in step S205 and the amount of the second air gap 402 aspirated in step S206. The aspiration amount of the reagent 113 can be set according to the analysis item and the type of the reagent. When the plurality of types of reagents are aspirated into the same tip by repeating steps S204 to S206, the control unit 108 calculates a sum of the amounts of the reagents aspirated in step S205 and a sum of the amounts of the second air gap aspirated in step S206.

In step S502, the control unit 108 calculates an amount of the first air gap 401 to be aspirated in step S202 based on the amount of the reagent 113 and the amount of the air gap that are calculated in step S501. At this time, the amount of the first air gap 401 is calculated such that a sum of the amount of the first air gap 401, the amount of the reagent 113, and the amount of the second air gap 402 is constant. The control unit 108 determines an operation amount of the syringe 104 based on each calculated aspiration amount, and issues an instruction to the syringe drive unit 106.

When the tip 101 has a sufficient volume to prevent the reagent 113 from flowing from the tip 101 into the probe 102, the arrangement (the position of the boundary 403 between the cleaning water 105 and the first air gap 401) of the fluid inside the probe 102 before the aspiration of the specimen 115 can be fixed by adjusting the amount of the first air gap 401 as described above. By fixing the arrangement of the fluid inside the probe 102, the influence of the difference in the pipetted amount of the reagent 113 on the pressure history at the time of aspiration of the specimen can be reduced.

As described above, in the present embodiment, the amount of the reagent 113 aspirated in step S205 and the amount of the second air gap 402 aspirated in step S206 are first calculated, and then the amount of the first air gap 401 to be aspirated in step S201 is adjusted. Instead, the amount of the first air gap 401 and the amount of the reagent 113 may be first calculated, and then the amount of the second air gap 402 may be adjusted.

A plurality of reference values (such as a sum of 20 µL, 50 µL, and 100 µL) may be stored in advance in the storage unit 123 for the sum of the amount of the first air gap 401, the amount of the reagent 113, and the amount of the second air gap 402, and when the amount of the reagent 113 used depending on the analysis item differs greatly, which reference value is to be used may be determined. For example, if the amount of the used reagent 113 is 20 µL, the sum can be set to 50 µL, and if the amount of the used reagent 113 is 50 µL, the sum can be set to 100 µL. Accordingly, the aspiration amounts of the air gaps 401 and 402 do not increase even though the amount of the reagent 113 is small. Therefore, an increase in a driving amount of the syringe 104 can be prevented, and a life of the syringe 104 can be prolonged.

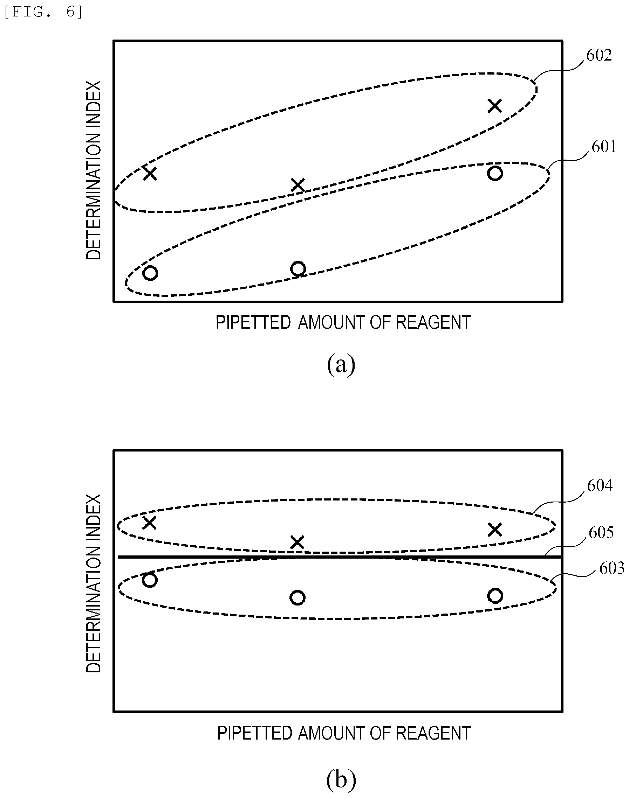

Effects of improving the accuracy of abnormality detection according to the present embodiment will be described. (a) of Fig. 6 shows a relationship between the determination index (for example, the average value of the pressure values) and the pipetted amount of the reagent 113 when the amount of the first air gap 401 is set to be constant without being adjusted (when processing in Fig. 5 is not performed). A plot of o shows the determination index when the specimen 115 is normally pipetted (normal pipetting group 601). A plot of × shows the determination index when bubble aspiration occurs at the time of aspiration of the specimen 115 (bubble aspiration group 602). As shown in (a) of Fig. 6, the determination index of the normal pipetting group 601 and the determination index of the bubble aspiration group 602 greatly vary depending on the pipetted amount of the reagent 113. Therefore, it is difficult to determine whether bubble aspiration has occurred by comparing the calculated determination index with the constant determination threshold.

On the other hand, (b) of Fig. 6 shows a relationship between the determination index (for example, the average value of the pressure values) and the pipetted amount of the reagent 113 when the amount (total volume of the fluids) of the first air gap 401 is adjusted according to the method shown in Fig. 5. The plot of o shows the determination index when the specimen 115 is normally pipetted (normal pipetting group 603). The plot of × shows the determination index when bubble aspiration occurs at the time of aspiration of the specimen 115 (bubble aspiration group 604). As shown in (b) of Fig. 6, by adjusting the amount of the first air gap 401, the determination index of the normal pipetting group 601 and the determination index of the bubble aspiration group 602 become almost constant values regardless of the pipetted amount of the reagent 113. Therefore, by setting a constant determination threshold 605 in advance and comparing the calculated determination index with the determination threshold 605, it is possible to determine whether bubble aspiration occurs.

An example has been described above in which whether bubble aspiration occurs is detected at the time of aspiration of the specimen 115, and the method according to the present embodiment can be similarly applied to the determination of whether clogging occurs. That is, regardless of the pipetted amount of the reagent 113, it is possible to determine whether clogging occurs at the time of aspiration by comparing the calculated determination index with a constant determination threshold.

<Technical Effect>

As described above, according to the automatic analysis device in the present embodiment, the pipetting operation is performed such that the total volume of the fluids (air gap and reagent) aspirated before the aspiration of the specimen becomes constant, and the position of the boundary between the cleaning liquid and the air gap that are present in the probe is fixed. Accordingly, the influence of the difference in the pipetted amount of the reagent on the pressure history at the time of aspiration of the specimen can be reduced. More specifically, the determination index calculated based on the pressure history in normal pipetting and the determination index calculated based on the pressure history in abnormal pipetting can be set to be substantially constant regardless of the pipetted amount of the reagent. Therefore, the constant determination threshold can be set regardless of the pipetted amount of the reagent, that is, regardless of the analysis item, and thus the presence or absence of an abnormality can be detected with high accuracy.

Since the abnormality can be detected with high accuracy, the reliability of the analysis result of the automatic analysis device can also be improved. Furthermore, since the pipetting operation is terminated when an abnormality is detected, loss of the reagent can also be reduced.

<Modification of First Embodiment>

The method for detecting an abnormality such as bubble aspiration and clogging at the time of aspiration of the specimen 115 has been described above, and the method according to the present embodiment can also be directly applied to an estimation of the pipetted amount of the specimen 115 and an estimation of the viscosity of the specimen 115.

In the present embodiment, the specimen 115 is used as the liquid to be detected for the pipetting abnormality. Alternatively, the method according to the present embodiment may be applied to the abnormality detection, the estimation of the pipetted amount, and the estimation of the viscosity at the time of aspiration of the reagent 113. In this case, the "specimen 115" in the above may be read as the "reagent 113".

In the present embodiment, as described with reference to Fig. 5, the amount of the first air gap 401 aspirated in step S202 is adjusted such that the sum of the amount of the first air gap 401 aspirated in step S202, the amount of the reagent 113 aspirated in step S205, and the amount of the second air gap 402 aspirated in step S206 is constant. This is for the purpose of reducing the influence of the pipetted amount of the reagent 113 on the pressure history at the time of aspiration of the specimen 115 by fixing the position of the boundary 403 between the cleaning water 105 and the first air gap 401 with respect to the probe.

Instead of setting the total volume of the fluids aspirated before the aspiration of the specimen 115 to be constant, according to the configuration and structure of the pipetting mechanism of the automatic analysis device, the amount of the first air gap 401 aspirated in step S202 may be calculated by a function depending on the amount of the reagent 113 aspirated in step S205 and the amount of the second air gap 402 aspirated in step S206. This function may be determined for each analysis item.

In the present embodiment, the amount of the air gap may be adjusted according to the pipetted amount of the reagent 113, and an operation such as a flow rate of the syringe 104 or a depth at which the tip 101 is immersed into the specimen 115 at the time of aspiration of the specimen 115 may be adjusted.

[Second Embodiment]

In the first embodiment, the pipetting mechanism (Fig. 1) has been described in which a disposable tip is mounted on the tip end of the probe and the reagent and the specimen are aspirated into the tip. However, the configuration of the pipetting mechanism is not limited to that shown in Fig. 1. Therefore, in a second embodiment, as another configuration of the pipetting mechanism, an example is provided in which the reagent and the specimen are directly aspirated into the probe without using the tip. Thus, even if the configuration of the pipetting mechanism is different, clogging or bubble aspiration at the time of aspiration of the specimen can be detected in the same manner as in the first embodiment.

<Configuration of Pipetting Mechanism>

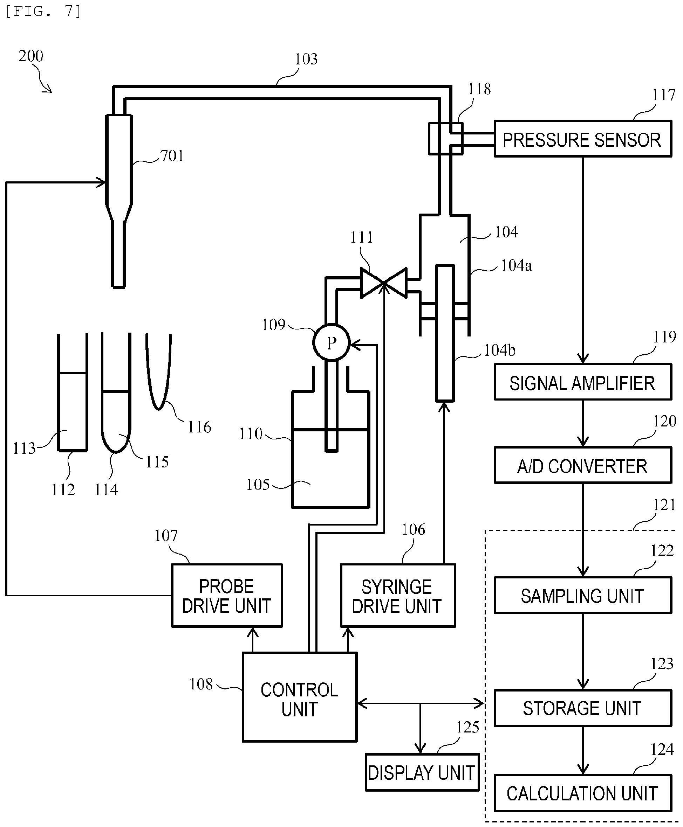

Fig. 7 is a schematic configuration diagram showing a pipetting mechanism 200 of an automatic analysis device according to the second embodiment. As shown in Fig. 7, the pipetting mechanism 200 includes a probe 701 (pipetting nozzle) instead of the tip 101 and the probe 102 shown in Fig. 1. A length of a pipe of the probe 701 can be the same as the total length of the pipes when the tip 101 in Fig. 1 is mounted on the probe 102. Since the configurations other than the probe 701 are similar to those of the pipetting mechanism 100 according to the first embodiment, a description thereof will be omitted.

The pipetting mechanism 200 according to the present embodiment directly aspirates the reagent 113 and the specimen 115 into the probe 701. The operation of the probe 701 is controlled by the probe drive unit 107.

<Pipetting Method>

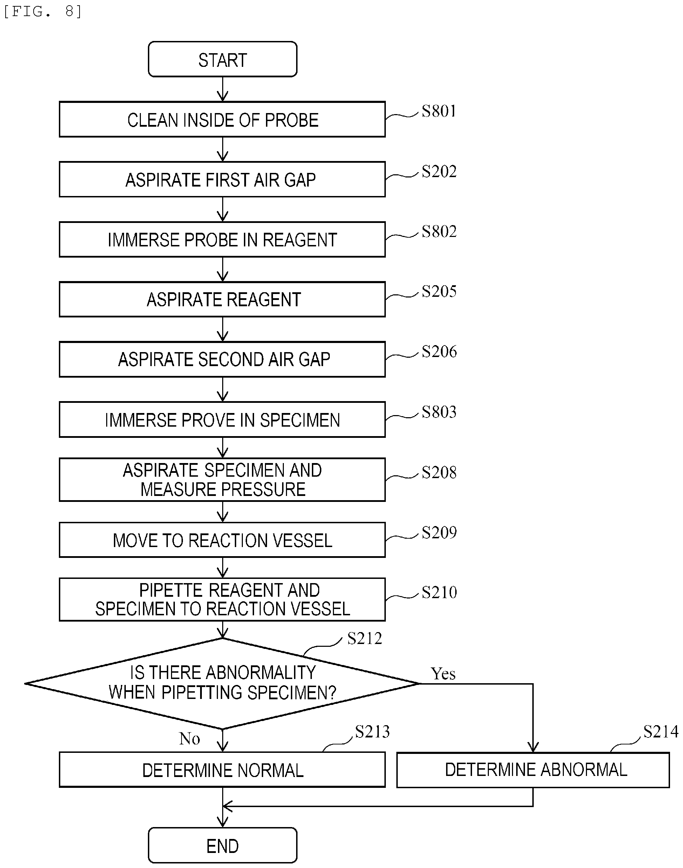

Fig. 8 is a flowchart illustrating a pipetting method according to the second embodiment. The pipetting method according to the present embodiment is actually performed by the control unit 108 shown in Fig. 7 controlling the operation of each component of the pipetting mechanism 200, and in the following, each component of the pipetting mechanism 200 may be described as the subject of the operation. The same reference numerals are given to the steps similar to those of the pipetting method (Fig. 2) according to the first embodiment. In the following, only the differences from the first embodiment will be described.

In the present embodiment, since the tip 101 is not used, steps S203 and S211 in Fig. 2 are not performed.

First, instead of step S201, in step S801, the control unit 108 opens the solenoid valve 111, drives the water supply pump 109, and discharges the cleaning water 105 in the water supply tank 110 from the probe 701. Accordingly, the inside of the probe 701 is cleaned.

After step S202 is performed, step S802 is performed instead of step S204. In step S802, the probe drive unit 107 moves the probe 701 above the reagent bottle 112 and lowers the probe 701 until the tip end of the probe 701 is immersed in the reagent 113.

After steps S205 and S206 are performed, step S803 is performed instead of step S207. In step S803, the probe drive unit 107 moves the probe 701 above the specimen tube 114 and lowers the probe 701 until the tip end of the probe 701 is immersed in the specimen 115.

The subsequent operations are the same as those in the first embodiment. The method for determining the presence or absence of an abnormality in step S212 is the same as the method shown in Fig. 3.

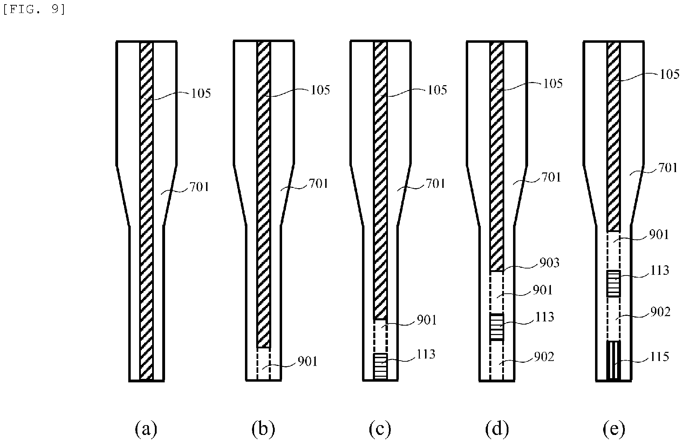

Fig. 9 is a schematic diagram showing a state of the fluid in the probe 701 in the pipetting operation in Fig. 8. (a) of Fig. 9 shows a state immediately after the inside of the probe 701 is cleaned with the cleaning water 105 in step S801. As shown in (a) of Fig. 9, the inside of the probe 701 is filled with the cleaning water 105.

(b) of Fig. 9 shows a state after a first air gap 901 is aspirated in step S202.

(c) of Fig. 9 shows a state after the reagent 113 is aspirated in step S205. The reagent 113 is located at the tip end of the probe 701.

(d) of Fig. 9 shows a state in which a second air gap 902 is aspirated in step S206. That is, a state before the specimen 115 is aspirated is shown. The second air gap 902 is located at the tip end of the probe 701, and the reagent 113 is located above the second air gap 902. (d) of Fig. 9 shows a state in which only one type of reagent 113 and the specimen 115 are aspirated. When the plurality of reagents are pipetted, the reagents 113 and the second air gap 902 are alternately arranged by the number of the aspirated reagents.

(e) of Fig. 9 shows a state in which the specimen 115 is aspirated in step S208. The specimen 115 is located at the tip end of the probe 701, the second air gap 902 is located above the specimen 115, and the reagent 113 is located on the second air gap 902.

As described above, the presence or absence of an abnormality is determined using the pressure history at the time of aspiration of the specimen 115. In the state ((d) of Fig. 9) before the specimen 115 is aspirated, a position of a boundary 903 between the cleaning water 105 and the first air gap 401 varies depending on the pipetted amount (volume) of the reagent 113. By fixing the position of the boundary 903, the influence of the pipetted amount of the reagent 113 on the pressure history at the time of aspiration of the specimen 115 can be reduced.

The position of the boundary 903 between the cleaning water 105 and the first air gap 901 varies depending on a sum (total volume of the fluids) of an amount of the first air gap 901 aspirated in step S202, the amount of the reagent 113 aspirated in step S205, and an amount of the second air gap 902 aspirated in step S206. Therefore, the position of the boundary 903 can be fixed by controlling the operation of the syringe 104 to set the total volume of the fluids aspirated before the aspiration of the specimen 115 to be constant. Aspiration amounts of the first air gap 901, the reagent 113, and the second air gap 902 are also calculated in the same manner as in the method shown in Fig. 5. The control unit 108 determines the operation amount of the syringe 104 based on each calculated aspiration amount, and issues the instruction to the syringe drive unit 106.

<Technical Effect>

Also in the second embodiment, as in the first embodiment, the pipetting operation is performed such that the total volume of the fluids (air gap and reagent) aspirated before the aspiration of the specimen becomes constant, and the position of the boundary between the cleaning liquid and the air gap that are present in the probe is set to be constant. Accordingly, the influence of the difference in the pipetted amount of the reagent on the pressure history at the time of aspiration of the specimen can be reduced, and an abnormality at the time of aspiration of the specimen 115 can be detected with high accuracy. Therefore, the reliability of the analysis result of the automatic analysis device can be improved. Further, in the present embodiment, since it is not necessary to mount or remove the tip 101, the pipetting operation can be performed more quickly as compared with that according to the first embodiment.

[Third Embodiment]

In the first embodiment and the second embodiment, the method of reducing the influence of the pipetted amount of the reagent on the pressure history at the time of aspiration of the specimen and detecting an abnormality at the time of aspiration of the specimen with high accuracy by setting a sum of the aspiration amount of the air gap aspirated before the specimen and the aspiration amount of the reagent aspirated before the specimen to be constant has been described. Therefore, in a third embodiment, a method of further reducing an influence of a pipetted amount of a reagent and detecting an abnormality at the time of aspiration of a specimen with higher accuracy is provided.

As a configuration of a pipetting mechanism of an automatic analysis device according to the present embodiment, the same configuration as that according to the first embodiment (Fig. 1) can be adopted. A pipetting operation is almost the same as the pipetting method (Fig. 2) according to the first embodiment. However, in the present embodiment, a method for determining the presence or absence of an abnormality in step S212 is different from that in the first embodiment.

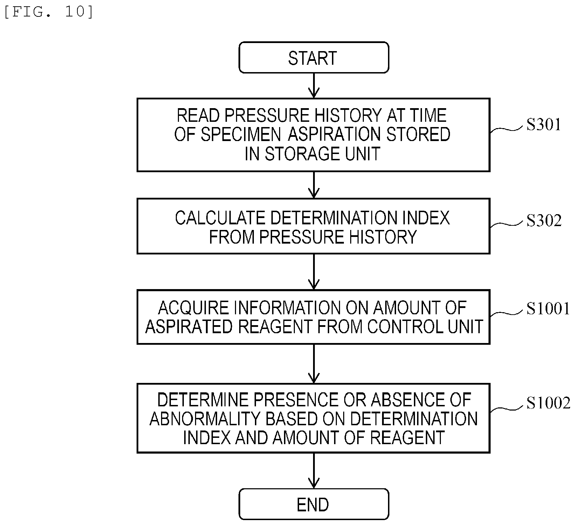

Fig. 10 is a flowchart illustrating a method for determining the presence or absence of an abnormality according to the third embodiment. A determination method shown in Fig. 10 is executed by the determination unit 121 instead of the determination method according to the first embodiment shown in Fig. 3. The same reference numerals are given to the steps similar to those in Fig. 3, and the description thereof will be omitted.

First, steps S301 and S302 are performed in the same manner as in the first embodiment, and a determination index is calculated based on the pressure history at the time of aspiration of the specimen.

Next, in step S1001, the determination unit 121 acquires information on the aspiration amount of the reagent 113 aspirated in step S205 from the control unit 108. When the plurality of reagents are aspirated, in step S1001, the determination unit 121 acquires, from the control unit 108, information on the sum of the amounts of reagents aspirated in step S205 and the sum of the amounts of the second air gap in step S206.

In step S1002, the calculation unit 124 determines the presence or absence of an abnormality at the time of aspiration of the specimen 115 based on the determination index calculated in step S302 and the information on the aspiration amount of the reagent 113 acquired in step S1001. At this time, as in the first embodiment, the difference between the average value of the pressure values during the aspiration operation of the specimen 115 and the average value of the pressure values before the aspiration operation is used as the determination index to determine whether the pipetting is normal or bubble aspiration.

In the present embodiment, the presence or absence of an abnormality is determined by setting the determination threshold to be a function that varies depending on the pipetted amount of the reagent 113 and comparing a magnitude relationship between the determination threshold and the determination index. The function of the determination threshold is stored in the storage unit 123 in advance.

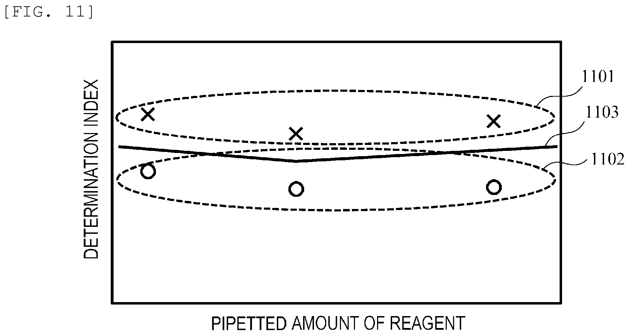

The determination threshold according to the present embodiment will be described. Fig. 11 is a diagram showing a relationship between the determination index (for example, the average value of the pressure values) and the pipetted amount of the reagent 113, and the determination threshold. The plot of o shows the determination index when the specimen 115 is normally pipetted (normal pipetting group 1101). The plot of × shows the determination index when bubble aspiration occurs at the time of aspiration of the specimen 115 (bubble aspiration group 1102). As shown in Fig. 11, for each of a distance between the normal pipetting group 1101 and the determination threshold 1103 and a distance between the bubble aspiration group 1102 and the determination threshold 1103, the determination threshold 1103 is set as a polygonal line function such that a fluctuation due to the pipetted amount of the reagent 113 is minimized. The determination threshold 1103 is not limited to the polygonal line function, and may be, for example, a linear function or any polynomial.

In this way, by setting the determination threshold used for abnormality determination as a function that varies depending on the pipetted amount of the reagent 113, an influence of a change in the pipetted amount of the reagent 113 on the distance between the normal pipetting group 1101 and the determination threshold 1103 and the distance between the bubble aspiration group 1102 and the determination threshold 1103 can be reduced. Accordingly, the presence or absence of an abnormality can be determined with higher accuracy as compared with the case of using a constant determination threshold ((b) of Fig. 6).

In the present embodiment, as in the first embodiment, the total volume of the fluids before the specimen 115 is aspirated is set to be constant, and the determination threshold used for the abnormality determination is set to be a function that varies depending on the pipetted amount of the reagent 113. However, even when the total volume of the fluids before the specimen 115 is aspirated is not constant, the present embodiment is effective in which the determination threshold is the function that varies depending on the pipetted amount of the reagent 113.

<Technical Effect>

As described above, the third embodiment adopts a configuration in which the determination threshold is set as the function that varies depending on the pipetted amount of the reagent, and the determination index calculated based on the pressure history at the time of aspiration of the specimen is compared with the function to determine the presence or absence of an abnormality. Accordingly, an abnormality can be detected with higher accuracy than that in the case of comparing the determination index and a constant determination threshold as in the first embodiment. Therefore, the reliability of the analysis result of the automatic analysis device can be further improved.

[Fourth Embodiment]

In the first embodiment to the third embodiment, the method of detecting an abnormality at the time of aspiration of the specimen with high accuracy by reducing the influence of the pipetted amount of the reagent (first liquid) aspirated before the aspiration of the specimen (second liquid) on the pressure history has been described. However, it is also effective to reduce an influence of not only the pipetted amount of the reagent but also physical property values such as the viscosity of the reagent on the pressure history. Therefore, in a fourth embodiment, in order to detect an abnormality with higher accuracy, a method is provided in which an influence of a physical property value of a reagent on a pressure history is also considered.

When the viscosity among the physical property values of the reagent changes, the fluid viscosity $\mu$ in the pipe in the Hagen-Poiseuille equation (1) described above changes. Accordingly, the pressure loss $P_{loss}$ changes, which influences the pressure history used for determining the presence or absence of an abnormality. When the reagent passes through a pipe having a small diameter, the pressure in the pipe changes due to a difference in the surface tension of the reagent in addition to a difference in the viscosity of the reagent. When a vertical length of a portion occupied by the reagent in the pipe is large, the pressure in the pipe also changes due to a difference in gravity caused by a difference in density of the reagent.

<Configuration of Pipetting Mechanism>

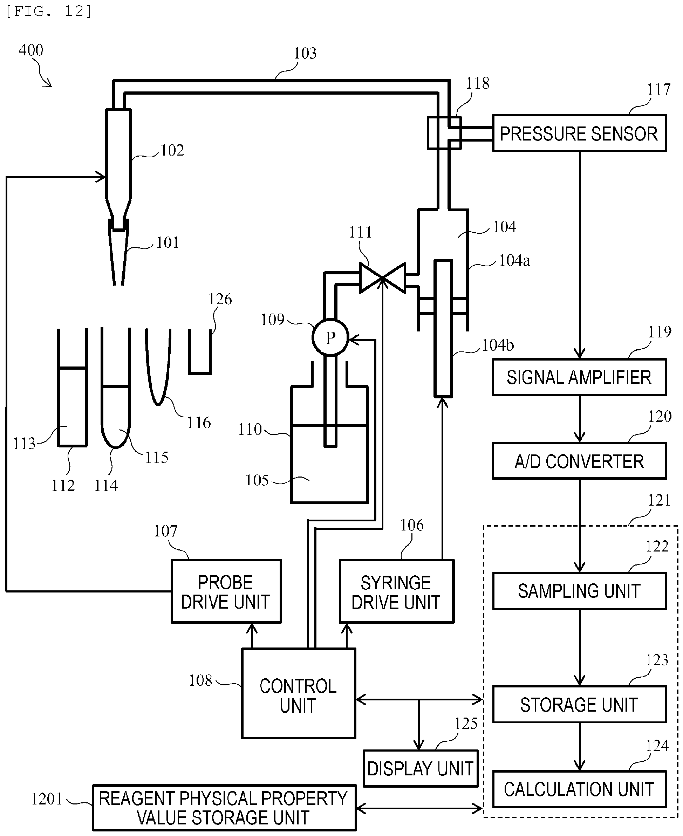

Fig. 12 is a schematic configuration diagram showing a pipetting mechanism 400 of an automatic analysis device according to the fourth embodiment. As shown in Fig. 12, the pipetting mechanism 400 is substantially the same as the pipetting mechanism (Fig. 1) according to the first embodiment, and further includes a reagent physical property value storage unit 1201.

The reagent physical property value storage unit 1201 is a database in which physical property values such as viscosity, surface tension, and density of various reagents used for analysis are stored. The reagent physical property value storage unit 1201 is connected to the determination unit 121 or is communicable with the determination unit 121. The information stored in the reagent physical property value storage unit 1201 can be read out by the determination unit 121.

<Pipetting Method>

A pipetting operation according to the present embodiment is almost the same as the pipetting method (Fig. 2) according to the first embodiment. However, in the present embodiment, a method for determining the presence or absence of an abnormality in step S212 is different from that in the first embodiment.

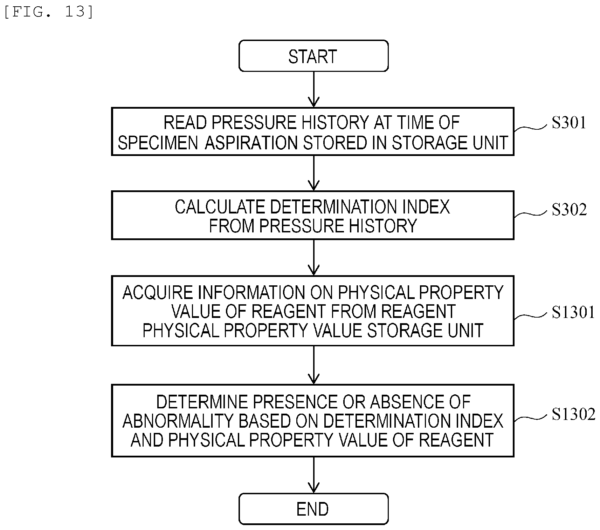

Fig. 13 is a flowchart illustrating a method for determining the presence or absence of an abnormality according to the fourth embodiment. The determination method shown in Fig. 13 is executed instead of the determination method according to the first embodiment shown in Fig. 3. The same reference numerals are given to the steps similar to those in Fig. 3, and the description thereof will be omitted.

First, steps S301 and S302 are performed in the same manner as in the first embodiment, and a determination index is calculated based on the pressure history at the time of aspiration of the specimen.

Next, in step S1301, the determination unit 121 acquires information on the physical property values such as viscosity, surface tension, and density of the reagent 113 from the reagent physical property value storage unit 1201.

In step S1302, the determination unit 121 determines the presence or absence of an abnormality at the time of aspiration of the specimen 115 based on the information on the determination index calculated in step S302 and the physical property values of the reagent 113 acquired in step S1301. At this time, as in the first embodiment, the difference between the average value of the pressure values during the aspiration operation of the specimen 115 and the average value of the pressure values before the aspiration operation is used as the determination index to determine whether the pipetting is normal or bubble aspiration.

Here, the presence or absence of an abnormality is determined based on the viscosity as an example of the physical property values of the reagent 113. More specifically, the presence or absence of an abnormality is determined by setting the determination threshold to be a function that varies depending on the viscosity of the reagent 113 and comparing the magnitude relationship between the determination threshold and the determination index. The function of the determination threshold is stored in the storage unit 123 in advance.

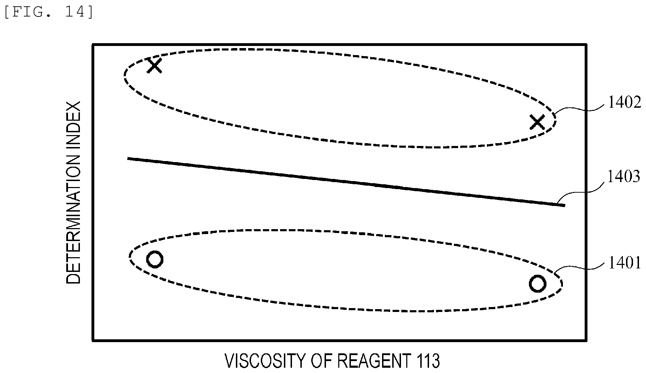

The determination threshold according to the present embodiment will be described. Fig. 14 is a diagram showing a relationship between the determination index (for example, the average value of the pressure values) and the viscosity of the reagent 113, and the determination threshold. The plot of o shows the determination index when the specimen 115 is normally pipetted (normal pipetting group 1401). The plot of × shows the determination index when bubble aspiration occurs at the time of aspiration of the specimen 115 (bubble aspiration group 1402). As shown in Fig. 14, for each of the distance between the normal pipetting group 1401 and the determination threshold 1403 and the distance between the bubble aspiration group 1402 and the determination threshold 1403, the determination threshold 1403 is set as a linear line function such that a fluctuation due to the viscosity of the reagent 113 is minimized. The determination threshold 1403 is not limited to the linear line function, and may be, for example, a linear function or any polynomial.

In this way, by setting the determination threshold used for abnormality determination as a function that varies depending on the viscosity of the reagent 113, an influence of a difference in the viscosity of the reagent 113 on a distance between the normal pipetting group 1401 and the determination threshold 1403 and a distance between the bubble aspiration group 1402 and the determination threshold 1403 can be reduced. Accordingly, the presence or absence of an abnormality can be determined with higher accuracy as compared with the case of using a constant determination threshold.

In the present embodiment, the function of the viscosity of the reagent 113 is used, and when the surface tension or density of the reagent 113 has a large influence on the pressure history due to characteristics of the pipetting mechanism, an abnormality can be detected with high accuracy by setting the determination threshold as a function of the surface tension or density of the reagent 113. Accordingly, an abnormality can be detected in consideration of which physical property value has a large influence on the pressure history depending on, for example, a diameter of a tip or a probe to be used.

In the present embodiment, as in the first embodiment, the total volume of the fluids before the specimen 115 is aspirated is set to be constant, and the determination threshold used for the abnormality determination is set to be a function that varies depending on the physical property values of the reagent 113. However, even when the total volume of the fluids before the specimen 115 is aspirated is not constant, the present embodiment is effective in which the determination threshold is the function that varies depending on the physical property values of the reagent 113.

<Technical Effect>

As described above, the fourth embodiment adopts a configuration in which the determination threshold is set as the function that varies depending on the physical property values of the reagent, and the function is compared with the determination index of the pressure history at the time of aspiration of the specimen to determine the presence or absence of an abnormality. Accordingly, an abnormality can be determined with higher accuracy than that in the case of comparing the certain constant determination threshold with the determination index as in the first embodiment. Since the influence of the physical property values of the reagent on the pressure history at the time of aspiration of the specimen can be reduced, an abnormality can be detected with higher accuracy based on the pressure history regardless of the physical property values of the reagent. Therefore, the reliability of the analysis result of the automatic analysis device can be further improved.

[Fifth Embodiment]

In the fourth embodiment, an example has been described in which the presence or absence of an abnormality is determined in consideration of the influence of physical property values such as the viscosity, surface tension, and density of the reagent on the pressure history. However, when there are the plurality of types of reagents, it is difficult to measure the physical property values of all types of reagents and hold the physical property values in the database (reagent physical property value storage unit). Therefore, in a fifth embodiment, a method for estimating a physical property value of the reagent 113 before the aspiration of a specimen is provided.

<Configuration of Pipetting Mechanism>

As a configuration of a pipetting mechanism of an automatic analysis device according to the present embodiment, the same configuration as that according to the fourth embodiment (Fig. 12) can be adopted, and thus a description thereof will be omitted.

<Pipetting Method>

A pipetting method according to the present embodiment is almost the same as the pipetting method shown in Fig. 2, and in step S205, the sampling unit 122 receives an input of a pressure value during the aspiration operation of the reagent 113 from the pressure sensor 117, and stores, in the storage unit 123, the pressure value during the aspiration operation of the reagent 113 as time-series data (pressure history at the time of aspiration of the reagent). The "pressure history at the time of aspiration of the reagent" refers to a pressure value in a predetermined time range including the operation time (aspiration operation time) of the syringe 104 when the reagent 113 is aspirated in step S205.

Since the pressure history at the time of aspiration of the reagent 113 reflects the viscosity of the reagent 113 as shown in equation (1), the viscosity of the reagent 113 can be estimated based on the pressure history. The calculation unit 124 calculates the viscosity of the reagent 113 based on the pressure history at the time of aspiration of the reagent 113 stored in the storage unit 123, and stores the viscosity in the reagent physical property value storage unit 1201 (Fig. 12).

In the determination of the presence or absence of an abnormality at the time of aspiration of the specimen 115 in step S212, the same steps as the determination method according to the fourth embodiment shown in Fig. 13 are executed.

An example has been described above in which the viscosity is estimated as one of the physical property values of the reagent 113. Alternatively, the density of the reagent 113 may be estimated and used for determining the presence or absence of an abnormality. In this case, the density may be calculated based on a gravitational head of the pressure value after the aspiration of the reagent 113 in step S205.

<Technical Effect>

In the fifth embodiment, the physical property value of the reagent is estimated based on the pressure history at the time of aspiration of the reagent, and the determination threshold used for determining the presence or absence of an abnormality is set as a function that varies depending on the estimated physical property value of the reagent. Accordingly, in addition to attaining the same effect as that according to the fourth embodiment, an abnormality can be detected with high accuracy even if the information on the physical property value of the reagent used for the analysis is not stored in the reagent physical property value storage unit.

[Sixth Embodiment]

In the fifth embodiment, a method of estimating a physical property value of the reagent using the pressure history at the time of aspiration of the reagent has been described. However, when there are a plurality of reagents to be simultaneously pipetted, the physical property values are estimated for each of the reagents to be aspirated by repeating steps S204 to S206 in Fig. 2, which complicates the processing. If the physical property values are estimated for each of the plurality of reagents, errors may accumulate and the accuracy of abnormality detection may decrease.

Therefore, in a sixth embodiment, a method is provided in which, when a plurality of reagents are pipetted, an influence of the plurality of reagents aspirated before the aspiration of a specimen on a pressure history at the time of aspiration of the specimen is considered.

<Pipetting Method>

A pipetting method according to the present embodiment is almost the same as the pipetting method shown in Fig. 2, but differs in the following points. That is, an aspiration flow rate of the syringe 104 at the time of aspiration of the second air gap in step S206 is equal to an aspiration flow rate of the syringe 104 at the time of aspiration of the specimen 115 in step S208. Step S206 is performed last among steps S204 to S206 repeated as many times as the necessary number of reagents. Accordingly, the influence of the plurality of reagents held in the tip 101 on the pressure history at the time of aspiration of the specimen can be estimated.

More specifically, in step S206, the sampling unit 122 receives an input of a pressure value during the aspiration operation of the second air gap from the pressure sensor 117, and stores, in the storage unit 123, the pressure value during the aspiration operation of the second air gap as time-series data (pressure history). The calculation unit 124 acquires the pressure history at the time of aspiration of the air gap in step S206, and estimates an average value (representative value) of the viscosities of the plurality of reagents 113 based on the pressure history and the above equation (1). The other steps can be performed in the same manner as those in the fifth embodiment.

<Technical Effect>

In the sixth embodiment, when the plurality of reagents are simultaneously pipetted, the representative value of the physical property values of the plurality of reagents is estimated, and a determination threshold used for determining the presence or absence of an abnormality is set as a function that varies depending on the estimated physical property values of the reagents. Accordingly, since it is not necessary to estimate the physical property values for all of the plurality of reagents, the processing is simple and errors are not accumulated. Therefore, an abnormality can be detected with high accuracy regardless of the physical property values of the plurality of reagents aspirated before the aspiration of the specimen.

According to a configuration in which the aspiration flow rate of the syringe 104 at the time of aspiration of the second air gap in step S206 performed last among steps S204 to S206 is equal to the aspiration flow rate of the syringe 104 at the time of aspiration of the specimen 115 in step S208, an influence of the viscosities of the reagents 113 on the pressure history at the time of aspiration of the specimen 115 can be more accurately estimated.

<Modification of Sixth Embodiment>

As described above, instead of estimating the representative value of the physical property values of the plurality of reagents, a determination index in which the influence of the physical property values or the pipetted amounts of the reagents is canceled can also be used as the determination index. Specifically, in the method for determining the presence or absence of an abnormality shown in Fig. 3, a difference between the pressure history in the aspiration of the second air gap in step S206 and the pressure history in the aspiration of the specimen 115 in step S208 is calculated as the determination index. Since the determination index calculated here is a difference between a pressure history immediately before the aspiration of the specimen and a pressure history after the aspiration of the specimen, an influence of the physical property values or the pipetted amounts of the plurality of reagents aspirated before the aspiration of the specimen is canceled out. By using such a determination index, the presence or absence of an abnormality can be determined with high accuracy regardless of the pipetted amounts or the physical property values of the reagents.

[Modification]

The present disclosure is not limited to the above embodiments, and includes various modifications. For example, the above embodiments have been described in detail for easy understanding of the present disclosure, and are not necessarily limited to those including all the configurations described above. It should be noted and understood that there can be improvements and modifications made of the present invention described in detail above without departing from the scope of the invention as set forth in the accompanying claims.

The pipetting method according to each of the above-described embodiments can be performed not only in the automatic analysis device but also in other devices having a fluid pipetting mechanism. For example, the method according to each embodiment can be applied to a pharmaceutical manufacturing apparatus, a microreactor, and the like.

Reference Sign List

| | |
|---|---|
| 100, 200, 400: | pipetting mechanism |
| 101: | tip |
| 102: | probe |
| 103: | flow path |
| 104: | syringe |
| 104a: | cylinder |
| 104b: | plunger |
| 105: | cleaning water |
| 106: | syringe drive unit |
| 107: | probe drive unit |
| 108: | control unit |
| 109: | water supply pump |
| 110: | water supply tank |
| 111: | solenoid valve |
| 112: | reagent bottle |
| 113: | reagent |
| 114: | specimen tube |
| 115: | specimen |
| 116: | reaction vessel |
| 117: | pressure sensor |
| 118: | branch block |
| 119: | signal amplifier |
| 120: | A/D converter |
| 121: | determination unit |
| 122: | sampling unit |
| 123: | storage unit |
| 124: | calculation unit |
| 125: | display unit |
| 126: | tip disposal unit |
| 401: | first air gap |
| 402: | second air gap |
| 403: | boundary |
| 601, | 603: normal pipetting group |
| 602, | 604: bubble aspiration group |
| 605: | determination threshold |
| 701: | probe |
| 901: | first air gap |
| 902: | second air gap |
| 903: | boundary |
| 1101: | normal pipetting group |
| 1102: | bubble aspiration group |
| 1103: | determination threshold |
| 1201: | reagent physical property value storage unit |
| 1401: | normal pipetting group |
| 1402: | bubble aspiration group |
| 1403: | determination threshold |

**Claims**

1. An automatic analysis device comprising:

a pipetting nozzle (101; 701) configured to pipette a fluid,
a pressure source (104) configured to generate a pressure fluctuation for pipetting the fluid by the pipetting nozzle (101; 701),
a flow path (103) connecting the pipetting nozzle (101; 701) and the pressure source (104),
a pressure sensor (117) configured to measure the pressure in the flow path (103) when the pipetting nozzle (101; 701) pipettes the fluid,
a storage unit (123) configured to store time-series data of the pressure measured by the pressure sensor (117), and
a control unit (108) configured to control the driving of the pipetting nozzle (101; 701) and the pressure source (104), wherein the control unit (108) controls the pipetting nozzle (101; 701) and the pressure source (104) to aspirate first air gap (401; 901), a first liquid (113), second air gap (402; 902), and a second liquid (115) in this order into the pipetting nozzle (101; 701),

**characterized in that** the control unit (108) determines at least one of the aspiration amount of the first air gap (401; 901) and the aspiration amount of the second air gap (402; 902) based on the aspiration amount of the first liquid (113).

2. The automatic analysis device according to claim 1, further comprising

   a determination unit (121) configured to detect an abnormality at the time of pipetting the second liquid (115) based on the time-series data.

3. The automatic analysis device according to claim 1, wherein the control unit (108) determines at least one of the aspiration amount of the first air gap (401; 901) and the aspiration amount of the second air gap (402; 902) so that the total volume of all the fluids aspirated into the pipetting nozzle (101; 701) before the aspiration of the second liquid (115) is constant.

4. The automatic analysis device according to claim 3, wherein the control unit (108) determines the aspiration amount of the first air gap (401; 901) so that the total volume of all the fluids aspirated into the pipetting nozzle (101; 701) before the aspiration of the second liquid (115) is constant.

5. The automatic analysis device according to claim 2, wherein

   the time-series data includes a pressure history at the time of aspiration of the second liquid (115), and
   the determination unit (121) calculates a determination index based on the pressure history and compares a preset determination threshold (605) with the determination index to detect an abnormality at the time of pipetting the second liquid (115).

6. The automatic analysis device according to claim 5, wherein the determination unit (121) calculates a difference between the pressure value before aspirating the second liquid (115) and the pressure value during aspirating the second liquid (115) as the determination index.

7. The automatic analysis device according to claim 1, wherein the control unit (108) controls the pressure source (104) so that the aspiration amount of the second air gap (402; 902) is equal to the aspiration amount of the second liquid (115).

8. The automatic analysis device according to claim 7, further comprising:

   a determination unit (121) configured to detect an abnormality at the time of pipetting the second liquid (115) based on the time-series data, wherein the determination unit (121) calculates a difference between the pressure value when aspirating the second air gap (402; 902) and the pressure value when aspirating the second liquid (115) as a determination index and compares a preset determination threshold (605) with the determination index to detect the abnormality.

9. The automatic analysis device according to claim 2, wherein

   the time-series data includes a pressure history at the time of aspiration of the second liquid (115),
   the determination unit (121) calculates a determination index based on the pressure history and compares a preset determination threshold (605) and the determination index to detect the abnormality,
   the determination threshold (605) is a function that changes based on the aspiration amount of the first liquid (113), and
   the aspiration amount of the first liquid (113) is acquired from the control unit (108) and the determination threshold (605) in the acquired aspiration amount of the first liquid (113) is compared with the determination index.

10. The automatic analysis device according to claim 2, wherein

    the time-series data includes a pressure history at the time of aspiration of the second liquid (115),
    the determination unit (121) calculates a determination index based on the pressure history and compares a preset determination threshold (605) and the determination index to detect the abnormality,
    the determination threshold (605) is a function that changes based on the physical property value of the first liquid (113), and
    the physical property value of the first liquid (113) is acquired from the control unit (108) and the determination threshold (605) in the acquired physical property value of the first liquid (113) is compared with the determination index.

11. The automatic analysis device according to claim 1, wherein the control unit (108) controls the pipetting nozzle (101; 701) and the pressure source (104) so that the first liquid (113) and the second liquid (115) are alternately aspirated into the pipetting nozzle (101; 701) a plurality of times.

12. A pipetting method of a fluid using an automatic analysis device, wherein

the automatic analysis device comprises:

a pipetting nozzle (101; 701) configured to pipette the fluid,
a pressure source (104) configured to generate a pressure fluctuation for pipetting the fluid by the pipetting nozzle (101; 701), and
a control unit (108) configured to control the driving of the pipetting nozzle (101; 701) and the pressure source (104), and

the pipetting method comprises:

by the control unit (108) driving the pressure source (104),
aspirating first air gap (401; 901) into the pipetting nozzle (101; 701);
aspirating a first liquid (113) into the pipetting nozzle (101; 701) after aspirating the first air gap (401; 901);
aspirating second air gap (402; 902) into the pipetting nozzle (101; 701) after aspirating the first liquid (113);
aspirating a second liquid (115) into the pipetting nozzle (101; 701) after aspirating the second air gap (402; 902); and
determining at least one of the aspiration amount of the first air gap (401; 901) and the aspiration amount of the second air gap (402; 902) based on the aspiration amount of the first liquid (113), by the control unit (108).

**Patentansprüche**

1. Automatische Analysevorrichtung, umfassend:

eine Pipettierdüse (101; 701), die zum Pipettieren eines Fluids konfiguriert ist,
eine Druckquelle (104), die dazu konfiguriert ist, eine Druckschwankung zum Pipettieren der Flüssigkeit durch die Pipettierdüse (101; 701) zu erzeugen,
einen Strömungsweg (103), der die Pipettierdüse (101; 701) und die Druckquelle (104) verbindet,
einen Drucksensor (117), der dazu konfiguriert ist, den Druck im Strömungsweg (103) zu messen, wenn die Pipettierdüse (101; 701) das Fluid pipettiert,
eine Speichereinheit (123), die dazu konfiguriert ist, Zeitseriendaten des von dem Drucksensor (117) gemessenen Drucks zu speichern, und
eine Steuereinheit (108), die dazu konfiguriert ist, den Antrieb der Pipettierdüse (101; 701) und der Druckquelle (104) zu steuern, wobei die Steuereinheit (108) die Pipettierdüse (101; 701) und die Druckquelle (104) steuert, um einen ersten Luftspalt (401; 901), eine erste Flüssigkeit (113), einen zweiten Luftspalt (402; 902) und eine zweite Flüssigkeit (115) in dieser Reihenfolge in die Pipettierdüse (101; 701) anzusaugen,
**dadurch gekennzeichnet, dass** die Steuereinheit (108) die Ansaugmenge des ersten Luftspalts (401; 901) und/oder die Ansaugmenge des zweiten Luftspalts (402; 902) auf der Grundlage der Ansaugmenge der ersten Flüssigkeit (113) bestimmt.

2. Automatische Analysevorrichtung nach Anspruch 1, die ferner Folgendes umfasst
eine Bestimmungseinheit (121), die dazu konfiguriert ist, eine Abnormalität zum Zeitpunkt des Pipettierens der zweiten Flüssigkeit (115) auf der Grundlage der Zeitreihendaten zu detektieren.

3. Automatische Analysevorrichtung nach Anspruch 1, wobei die Steuereinheit (108) die Ansaugmenge des ersten Luftspaltes (401; 901) und/oder die Ansaugmenge des zweiten Luftspaltes (402; 902) so bestimmt, dass das Gesamtvolumen aller in die Pipettierdüse (101; 701) angesaugten Flüssigkeiten vor dem Ansaugen der zweiten Flüssigkeit (115) konstant ist.

4. Automatische Analysevorrichtung nach Anspruch 3, wobei die Steuereinheit (108) die Ansaugmenge des ersten Luftspalts (401; 901) so bestimmt, dass das Gesamtvolumen aller in die Pipettierdüse (101; 701) angesaugten Flüssigkeiten vor dem Ansaugen der zweiten Flüssigkeit (115) konstant ist.

5. Automatische Analysevorrichtung nach Anspruch 2, wobei

die Zeitreihendaten einen Druckverlauf zum Zeitpunkt des Ansaugens der zweiten Flüssigkeit (115) enthalten, und
die Bestimmungseinheit (121) einen Bestimmungsindex auf der Grundlage des Druckverlaufs berechnet und einen voreingestellten Bestimmungsschwellenwert (605) mit dem Bestimmungsindex vergleicht, um eine Abnormalität zum Zeitpunkt des Pipettierens der zweiten Flüssigkeit (115) zu detektieren.

6. Automatische Analysevorrichtung nach Anspruch 5, wobei die Bestimmungseinheit (121) eine Differenz zwischen dem Druckwert vor dem Ansaugen der zweiten Flüssigkeit (115) und dem Druckwert während des Ansaugens der zweiten Flüssigkeit (115) als Bestimmungsindex berechnet.

**7.** Automatische Analysevorrichtung nach Anspruch 1, wobei die Steuereinheit (108) die Druckquelle (104) so steuert, dass die Ansaugmenge des zweiten Luftspalts (402; 902) gleich der Ansaugmenge der zweiten Flüssigkeit (115) ist.

**8.** Automatische Analysevorrichtung nach Anspruch 7, die ferner Folgendes umfasst:

eine Bestimmungseinheit (121), die dazu konfiguriert ist, eine Abnormalität zum Zeitpunkt des Pipettierens der zweiten Flüssigkeit (115) auf der Grundlage der Zeitreihendaten zu detektieren,
wobei die Bestimmungseinheit (121) eine Differenz zwischen dem Druckwert beim Ansaugen des zweiten Luftspalts (402; 902) und dem Druckwert beim Ansaugen der zweiten Flüssigkeit (115) als Bestimmungsindex berechnet und einen voreingestellten Bestimmungsschwellenwert (605) mit dem Bestimmungsindex vergleicht, um die Abnormalität zu detektieren.

**9.** Automatische Analysevorrichtung nach Anspruch 2, wobei

die Zeitreihendaten einen Druckverlauf zum Zeitpunkt des Ansaugens der zweiten Flüssigkeit (115) enthalten,
die Bestimmungseinheit (121) einen Bestimmungsindex auf der Grundlage des Druckverlaufs berechnet und einen voreingestellten Bestimmungsschwellenwert (605) mit dem Bestimmungsindex vergleicht, um die Abnormalität zu detektieren,
der Bestimmungsschwellenwert (605) eine Funktion ist, die sich in Abhängigkeit von der Ansaugmenge der ersten Flüssigkeit (113) ändert, und
die Ansaugmenge der ersten Flüssigkeit (113) von der Steuereinheit (108) erfasst wird und den Bestimmungsschwellenwert (605) in der erfassten Ansaugmenge der ersten Flüssigkeit (113) mit dem Bestimmungsindex verglichen wird.

**10.** Automatische Analysevorrichtung nach Anspruch 2, wobei

die Zeitreihendaten einen Druckverlauf zum Zeitpunkt des Ansaugens der zweiten Flüssigkeit (115) enthalten,
die Bestimmungseinheit (121) einen Bestimmungsindex auf der Grundlage des Druckverlaufs berechnet und einen voreingestellten Bestimmungsschwellenwert (605) mit dem Bestimmungsindex vergleicht, um die Abnormalität zu detektieren,
der Bestimmungsschwellenwert (605) eine Funktion ist, die sich basierend auf dem physikalischen Eigenschaftswert der ersten Flüssigkeit (113) ändert, und
der physikalische Eigenschaftswert der ersten Flüssigkeit (113) von der Steuereinheit (108) erfasst wird und der Bestimmungsschwellenwert (605) in dem erfassten physikalischen Eigenschaftswert der ersten Flüssigkeit (113) mit dem Bestimmungsindex verglichen wird.

**11.** Automatische Analysevorrichtung nach Anspruch 1, wobei die Steuereinheit (108) die Pipettierdüse (101; 701) und die Druckquelle (104) so steuert, dass die erste Flüssigkeit (113) und die zweite Flüssigkeit (115) mehrmals abwechselnd in die Pipettierdüse (101; 701) angesaugt werden.

**12.** Verfahren zum Pipettieren eines Fluids unter Verwendung einer automatischen Analysevorrichtung, wobei

die automatische Analysevorrichtung umfasst:

eine Pipettierdüse (101; 701), die zum Pipettieren der Flüssigkeit konfiguriert ist,
eine Druckquelle (104), die dazu konfiguriert ist, eine Druckschwankung zum Pipettieren des Fluids durch die Pipettierdüse (101; 701) zu erzeugen, und
eine Steuereinheit (108), die dazu konfiguriert ist, den Antrieb der Pipettierdüse (101; 701) und der Druckquelle (104) zu steuern, und

in dem Pipettierverfahren:

die Druckquelle (104) durch die Steuereinheit (108) angesteuert wird,
der erste Luftspalt (401; 901) in die Pipettierdüse (101; 701) angesaugt wird;
nach dem Ansaugen des ersten Luftspalts (401; 901) eine erste Flüssigkeit (113) in die Pipettierdüse (101; 701) angesaugt wird;
nach dem Ansaugen der ersten Flüssigkeit (113) ein zweiter Luftspalt (402; 902) in die Pipettierdüse (101; 701) angesaugt wird;
nach dem Ansaugen des zweiten Luftspalts (402; 902) eine zweite Flüssigkeit (115) in die Pipettierdüse (101; 701) angesaugt wird; und
die Ansaugmenge des ersten Luftspalts (401; 901) und/oder die Ansaugmenge des zweiten Luftspalts (402; 902) auf der Grundlage der Ansaugmenge der ersten Flüssigkeit (113) durch die Steuereinheit (108) bestimmt wird.

## Revendications

1. Dispositif d'analyse automatique comprenant :

   un embout (101 ; 701) de pipetage configuré pour pipeter un fluide,
   une source (104) de pression configurée pour générer une fluctuation de pression pour le pipetage du fluide par l'embout (101 ; 701) de pipetage,
   un chemin (103) d'écoulement connectant l'embout (101 ; 701) de pipetage et la source (104) de pression,
   un capteur (117) de pression configuré pour mesurer la pression dans le chemin (103) d'écoulement lorsque l'embout (101 ; 701) de pipetage pipette le fluide,
   une unité (123) de stockage configurée pour stocker des données chronologiques de la pression mesurée par le capteur (117) de pression, et
   une unité (108) de commande configurée pour commander l'entraînement de l'embout (101 ; 701) de pipetage et de la source (104) de pression, dans lequel l'unité (108) de commande commande l'embout (101 ; 701) de pipetage et la source (104) de pression pour aspirer un premier espace d'air (401 ; 901), un premier liquide (113), un deuxième espace d'air (402 ; 902), et un deuxième liquide (115) dans cet ordre dans l'embout (101 ; 701) de pipetage,
   **caractérisé en ce que** l'unité (108) de commande détermine au moins une parmi la quantité d'aspiration du premier espace d'air (401 ; 901) et la quantité d'aspiration du deuxième espace d'air (402 ; 902) sur la base de la quantité d'aspiration du premier liquide (113).

2. Dispositif d'analyse automatique selon la revendication 1, comprenant en outre
   une unité (121) de détermination configurée pour détecter une anomalie au moment du pipetage du deuxième liquide (115) sur la base des données chronologiques.

3. Dispositif d'analyse automatique selon la revendication 1, dans lequel l'unité (108) de commande détermine au moins une parmi la quantité d'aspiration du premier espace d'air (401 ; 901) et la quantité d'aspiration du deuxième espace d'air (402 ; 902) de façon à ce que le volume total de tous les fluides aspirés dans l'embout (101 ; 701) de pipetage avant l'aspiration du deuxième liquide (115) soit constant.

4. Dispositif d'analyse automatique selon la revendication 3, dans lequel l'unité (108) de commande détermine la quantité d'aspiration du premier espace d'air (401 ; 901) de façon à ce que le volume total de tous les fluides aspirés dans l'embout (101 ; 701) de pipetage avant l'aspiration du deuxième liquide (115) soit constant.

5. Dispositif d'analyse automatique selon la revendication 2, dans lequel

   les données chronologiques incluent un historique de pression au moment de l'aspiration du deuxième liquide (115), et
   l'unité (121) de détermination calcule un indice de détermination sur la base de l'historique de pression et compare un seuil (605) de détermination prédéfini avec l'indice de détermination pour détecter une anomalie au moment du pipetage du deuxième liquide (115).

6. Dispositif d'analyse automatique selon la revendication 5, dans lequel l'unité (121) de détermination calcule une différence entre la valeur de pression avant l'aspiration du deuxième liquide (115) et la valeur de pression pendant l'aspiration du deuxième liquide (115) comme l'indice de détermination.

7. Dispositif d'analyse automatique selon la revendication 1, dans lequel l'unité (108) de commande commande la source (104) de pression de façon à ce que la quantité d'aspiration du deuxième espace d'air (402 ; 902) soit égale à la quantité d'aspiration du deuxième liquide (115).

8. Dispositif d'analyse automatique selon la revendication 7, comprenant en outre :

   une unité (121) de détermination configurée pour détecter une anomalie au moment du pipetage du deuxième liquide (115) sur la base des données chronologiques,
   dans lequel l'unité (121) de détermination calcule une différence entre la valeur de pression lors de l'aspiration du deuxième espace d'air (402 ; 902) et la valeur de pression lors de l'aspiration du deuxième liquide (115) comme un indice de détermination et compare un seuil (605) de détermination prédéfini avec l'indice de détermination pour détecter l'anomalie.

9. Dispositif d'analyse automatique selon la revendication 2, dans lequel

   les données chronologiques incluent un historique de pression au moment de l'aspiration du deuxième liquide (115),
   l'unité (121) de détermination calcule un indice de détermination sur la base de l'historique de pression et compare un seuil (605) de détermination prédéfini et l'indice de détermination pour détecter l'anomalie,

le seuil (605) de détermination est une fonction qui change sur la base de la quantité d'aspiration du premier liquide (113), et

la quantité d'aspiration du premier liquide (113) est acquise depuis l'unité (108) de commande et le seuil (605) de détermination dans la quantité d'aspiration acquise du premier liquide (113) est comparé avec l'indice de détermination.

10. Dispositif d'analyse automatique selon la revendication 2, dans lequel

les données chronologiques incluent un historique de pression au moment de l'aspiration du deuxième liquide (115),

l'unité (121) de détermination calcule un indice de détermination sur la base de l'historique de pression et compare un seuil (605) de détermination prédéfini et l'indice de détermination pour détecter l'anomalie,

le seuil (605) de détermination est une fonction qui change sur la base de la valeur de propriété physique du premier liquide (113), et

la valeur de propriété physique du premier liquide (113) est acquise depuis l'unité (108) de commande et le seuil (605) de détermination dans la valeur de propriété physique acquise du premier liquide (113) est comparé avec l'indice de détermination.

11. Dispositif d'analyse automatique selon la revendication 1, dans lequel l'unité (108) de commande commande l'embout (101 ; 701) de pipetage et la source (104) de pression de façon à ce que le premier liquide (113) et le deuxième liquide (115) soient aspirés de manière alternée dans l'embout (101 ; 701) de pipetage une pluralité de fois.

12. Procédé de pipetage d'un fluide en utilisant un dispositif d'analyse automatique, dans lequel

le dispositif d'analyse automatique comprend :

un embout (101 ; 701) de pipetage configuré pour pipeter le fluide,
une source (104) de pression configurée pour générer une fluctuation de pression pour le pipetage du fluide par l'embout (101 ; 701) de pipetage, et
une unité (108) de commande configurée pour commander l'entraînement de l'embout (101 ; 701) de pipetage et de la source (104) de pression, et

le procédé de pipetage comprend :

par l'unité (108) de commande entraînant la source (104) de pression,

l'aspiration d'un premier espace d'air (401 ; 901) dans l'embout (101 ; 701) de pipetage ;
l'aspiration d'un premier liquide (113) dans l'embout (101 ; 701) de pipetage après l'aspiration du premier espace d'air (401 ; 901) ;
l'aspiration d'un deuxième espace d'air (402 ; 902) dans l'embout (101 ; 701) de pipetage après l'aspiration du premier liquide (113) ;
l'aspiration d'un deuxième liquide (115) dans l'embout (101 ; 701) de pipetage après l'aspiration du deuxième espace d'air (402 ; 902) ; et
la détermination d'au moins une parmi la quantité d'aspiration du premier espace d'air (401 ; 901) et la quantité d'aspiration du deuxième espace d'air (402 ; 902) sur la base de la quantité d'aspiration du premier liquide (113), par l'unité (108) de commande.

[FIG. 1]

[FIG. 2]

```
                    ┌─────────────────┐
                    │      START      │
                    └─────────────────┘
                             │
                             ▼
          ┌──────────────────────────────────┐  ⌇ S201
          │      CLEAN INSIDE OF PROBE        │
          └──────────────────────────────────┘
                             │
                             ▼
          ┌──────────────────────────────────┐  ⌇ S202
          │      ASPIRATE FIRST AIR GAP       │
          └──────────────────────────────────┘
                             │
                             ▼
          ┌──────────────────────────────────┐  ⌇ S203
          │            MOUNT TIP             │
          └──────────────────────────────────┘
                             │
                             ▼
          ┌──────────────────────────────────┐  ⌇ S204
          │      IMMERSE TIP IN REAGENT       │
          └──────────────────────────────────┘
                             │
                             ▼
          ┌──────────────────────────────────┐  ⌇ S205
          │         ASPIRATE REAGENT          │
          └──────────────────────────────────┘
                             │
                             ▼
          ┌──────────────────────────────────┐  ⌇ S206
          │      ASPIRATE SECOND AIR GAP      │
          └──────────────────────────────────┘
                             │
                             ▼
          ┌──────────────────────────────────┐  ⌇ S207
          │      IMMERSE TIP IN SPECIMEN      │
          └──────────────────────────────────┘
                             │
                             ▼
          ┌──────────────────────────────────┐  ⌇ S208
          │      ASPIRATE SPECIMEN AND        │
          │        MEASURE PRESSURE           │
          └──────────────────────────────────┘
                             │
                             ▼
          ┌──────────────────────────────────┐  ⌇ S209
          │      MOVE TO REACTION VESSEL      │
          └──────────────────────────────────┘
                             │
                             ▼
          ┌──────────────────────────────────┐  ⌇ S210
          │      PIPETTE REAGENT AND          │
          │  SPECIMEN TO REACTION VESSEL      │
          └──────────────────────────────────┘
                             │
                             ▼
          ┌──────────────────────────────────┐  ⌇ S211
          │           TAKE OUT TIP            │
          └──────────────────────────────────┘
                             │
                             ▼        ⌇ S212
                    ◇─────────────────◇
                   ╱  IS THERE ABNORMALITY ╲    Yes
                   ╲ WHEN PIPETTING SPECIMEN?╱ ────────┐
                    ◇─────────────────◇               │
                      No    │                          │
                     ⌇S213  ▼                   ⌇S214  ▼
          ┌──────────────────────┐      ┌──────────────────────────┐
          │   DETERMINE NORMAL    │      │   DETERMINE ABNORMAL      │
          └──────────────────────┘      └──────────────────────────┘
                     │                               │
                     ▼◄──────────────────────────────┘
                    ┌─────────────────┐
                    │       END       │
                    └─────────────────┘
```

[FIG. 3]

START

READ PRESSURE HISTORY AT TIME OF SPECIMEN ASPIRATION STORED IN STORAGE UNIT — S301

CALCULATE DETERMINATION INDEX FROM PRESSURE HISTORY — S302

DETERMINE PRESENCE OR ABSENCE OF ABNORMALITY BASED ON DETERMINATION INDEX — S303

END

[FIG. 4]

(a)     (b)     (c)     (d)     (e)

[FIG. 5]

```
              ┌──────────────────┐
              │      START       │
              └──────────────────┘
                       │
                       ▼
┌────────────────────────────────────────────────┐
│  CALCULATE ASPIRATION AMOUNT OF REAGENT         │ ⌐S501
│  AND ASPIRATION AMOUNT OF SECOND AIR GAP        │
└────────────────────────────────────────────────┘
                       │
                       ▼
┌────────────────────────────────────────────────┐
│        CALCULATE ASPIRATION AMOUNT OF           │ ⌐S502
│             FIRST AIR GAP                       │
└────────────────────────────────────────────────┘
                       │
                       ▼
              ┌──────────────────┐
              │       END        │
              └──────────────────┘
```

[FIG. 6]

(a)

(b)

[FIG. 7]

[FIG. 8]

```
                    ┌─────────────────┐
                    │      START      │
                    └────────┬────────┘
                             ↓
        ┌──────────────────────────────────────┐
        │       CLEAN INSIDE OF PROBE          │───S801
        └──────────────────┬───────────────────┘
                           ↓
        ┌──────────────────────────────────────┐
        │       ASPIRATE FIRST AIR GAP         │───S202
        └──────────────────┬───────────────────┘
                           ↓
        ┌──────────────────────────────────────┐
        │      IMMERSE PROBE IN REAGENT        │───S802
        └──────────────────┬───────────────────┘
                           ↓
        ┌──────────────────────────────────────┐
        │          ASPIRATE REAGENT            │───S205
        └──────────────────┬───────────────────┘
                           ↓
        ┌──────────────────────────────────────┐
        │       ASPIRATE SECOND AIR GAP        │───S206
        └──────────────────┬───────────────────┘
                           ↓
        ┌──────────────────────────────────────┐
        │      IMMERSE PROVE IN SPECIMEN       │───S803
        └──────────────────┬───────────────────┘
                           ↓
        ┌──────────────────────────────────────┐
        │      ASPIRATE SPECIMEN AND           │───S208
        │        MEASURE PRESSURE              │
        └──────────────────┬───────────────────┘
                           ↓
        ┌──────────────────────────────────────┐
        │       MOVE TO REACTION VESSEL        │───S209
        └──────────────────┬───────────────────┘
                           ↓
        ┌──────────────────────────────────────┐
        │      PIPETTE REAGENT AND             │───S210
        │  SPECIMEN TO REACTION VESSEL         │
        └──────────────────┬───────────────────┘
                           ↓                     S212
                      ╱─────────────╲
                    ╱   IS THERE ABNORMALITY   ╲      Yes
                   ╱  WHEN PIPETTING SPECIMEN?  ╲─────────────┐
                    ╲                           ╱             │
                      ╲─────────────╱                         │
                    No       ↓        S213                    │  S214
        ┌──────────────────────────────┐    ┌──────────────────────────────┐
        │      DETERMINE NORMAL         │    │     DETERMINE ABNORMAL        │
        └──────────────┬───────────────┘    └──────────────┬───────────────┘
                       ↓←──────────────────────────────────┘
                ┌─────────────────┐
                │       END       │
                └─────────────────┘
```

[FIG. 9]

(a)        (b)        (c)        (d)        (e)

[FIG. 10]

```
                    ┌──────────────────┐
                    │      START       │
                    └──────────────────┘
                             │
                             ▼
        ┌──────────────────────────────────────┐
        │   READ PRESSURE HISTORY AT TIME       │⟋S301
        │  OF SPECIMEN ASPIRATION STORED        │
        │           IN STORAGE UNIT             │
        └──────────────────────────────────────┘
                             │
                             ▼
        ┌──────────────────────────────────────┐
        │   CALCULATE DETERMINATION INDEX       │⟋S302
        │       FROM PRESSURE HISTORY           │
        └──────────────────────────────────────┘
                             │
                             ▼
        ┌──────────────────────────────────────┐
        │  ACQUIRE INFORMATION ON AMOUNT OF     │⟋S1001
        │ ASPIRATED REAGENT FROM CONTROL UNIT   │
        └──────────────────────────────────────┘
                             │
                             ▼
        ┌──────────────────────────────────────┐
        │  DETERMINE PRESENCE OR ABSENCE OF     │⟋S1002
        │ ABNORMALITY BASED ON DETERMINATION    │
        │   INDEX AND AMOUNT OF REAGENT         │
        └──────────────────────────────────────┘
                             │
                             ▼
                    ┌──────────────────┐
                    │       END        │
                    └──────────────────┘
```

[FIG. 11]

[FIG. 12]

[FIG. 13]

START

↓

READ PRESSURE HISTORY AT TIME OF
SPECIMEN ASPIRATION STORED IN STORAGE UNIT — S301

↓

CALCULATE DETERMINATION INDEX
FROM PRESSURE HISTORY — S302

↓

ACQUIRE INFORMATION ON PHYSICAL PROPERTY
VALUE OF REAGENT FROM REAGENT
PHYSICAL PROPERTY VALUE STORAGE UNIT — S1301

↓

DETERMINE PRESENCE OR ABSENCE OF
ABNORMALITY BASED ON DETERMINATION INDEX
AND PHYSICAL PROPERTY VALUE OF REAGENT — S1302

↓

END

[FIG. 14]

**REFERENCES CITED IN THE DESCRIPTION**

**Patent documents cited in the description**

- JP 3633631 B
- JP H11258244 B
- WO 2019060716 A1